# EUROPÄISCHE PATENTSCHRIFT

(11) **EP 2 419 985 B1**
(45) Veröffentlichungstag und Bekanntmachung des Hinweises auf die Patenterteilung: **25.12.2013**
(21) Anmeldenummer: 10718866.6
(22) Anmeldetag: 09.04.2010
(51) Int. Cl.: H02J 5/00, H04L 1/08

(54) **VORRICHTUNG UND VERFAHREN ZUR BERÜHRUNGSLOSEN ÜBERTRAGUNG ELEKTRISCHER LEISTUNG UND INFORMATION**
DEVICE AND METHOD FOR CONTACTLESS COUPLING AND TRANSMISSION OF ELECTRICAL POWER AND DATA
DISPOSITIF ET PROCÉDÉ POUR COUPLAGE ÉLECTRIQUE SANS CONTACT ET TRANSMISSION DE PUISSANCE ÉLECTRIQUE ET DES DONNÉES

(30) Priorität: 17.04.2009 DE 102009017552
(43) Veröffentlichungstag der Anmeldung: 22.02.2012
(73) Patentinhaber: SEW-EURODRIVE GmbH & Co. KG, 76646 Bruchsal (DE)
(72) Erfinder: HUA, Zhidong, 76131 Karlsruhe (DE); SIMON, Olaf, 76646 Bruchsal (DE); SCHÄFER, Thomas, 76689 Neuthard (DE)
(74) Vertreter: Tüngler, Eberhard
(86) Internationale Anmeldenummer: PCT/EP2010/002212
(87) Internationale Veröffentlichungsnummer: WO 2010/118838

(56) Entgegenhaltungen:
- DE-B3- 10 349 242
- US-A- 4 577 332

## Beschreibung

Die Erfindung betrifft eine Vorrichtung und ein Verfahren zur berührungslosen Übertragung von elektrischer Leistung und Information.

Aus der DE 103 49 242 B3 ist eine Vorrichtung und ein Verfahren zur berührungslosen Übertragung von elektrischer Leistung und Information bekannt.

Die US 6,091,782 A offenbart ein Verfahren bei dem die digitalen Amplituden-Werte eines mehrfach gesendeten mehrstufigen Signals in zu einer Sendung korrespondierenden Stellen eines Speichers gespeichert werden. Gleichzeitig wird ein Satz von Amplituden-Werten aus den Stellen des Speichers ausgelesen und mit Entscheidungs-Grenzwert-Bändern, welche entsprechende Datensymbole darstellen, verglichen. Eine Entscheidung fällt zu Gunsten des Datensymbols eines korrespondierenden Entscheidungs-Grenzwert-Bandes, wenn die Mehrzahl des Satzes der Amplituden-Werte in dem Entscheidungs-Grenzwert-Band liegen, oder zu Gunsten des Datensymbols desjenigen Entscheidungs-Grenzwert-Bandes, in welchem ein Amplituden-Wert liegt oder zu welchem ein Amplituden-Wert am nächsten liegt, wenn kein anderer Amplituden-Wert näher an einem anderen Entscheidungs-Grenzwert-Band liegt.

Die US 4,577,332 A betrifft ein gattungsgemäßes Verfahren, bei welchem digitale Signale zweimal gesendet werden. Eine Empfangsvorrichtung entschlüsselt die beiden Signale und bestimmt einen Wert und eine Abweichung jedes Signals von einem vorgegeben Niveau. Eine Wichtung, welche umgekehrt proportional zur Abweichung ist, wird jedem Signal zugeordnet. Der Wert desjenigen Signals mit der größeren Wichtung wird als korrekt angenommen.

Ein Verfahren, um eine 3/5 Mehrheitsentscheidung für TACS/AMPS Mobiltelefonsysteme auszuführen, wird in der US 6,412,094 B1 offenbart. Jedes Wort eines Datenrahmens wird fünf Mal wiederholt und jedem Bit eines Wortes wird ein Wert gegeben, in dem eine Mehrheitsentscheidung über die fünf Wiederholungen getroffen wird.

Die US 4,128,809 A offenbart einen Diversity-Empfänger, um wiederholt empfangene Signal-Bits unter Beachtung eines maximalen Niveaus und/oder eines bevorzugt empfangenen Signal-Bits zu verarbeiten

Aus der US 4,264,955 A ist ein Entscheidungsschaltkreis bekannt, welcher ein richtiges Ausgangssignal bereitstellt, welches aus den zwei nächstliegenden Signalniveaus von drei Eingangssignalen hergeleitet ist, wobei die drei Eingangssignale alle die Messung desselben Phänomens betreffen.

Der Erfindung liegt daher die Aufgabe zugrunde, eine Vorrichtung und ein Verfahren zur berührungslosen Übertragung von elektrischer Leistung und Information weiterzubilden.

Erfindungsgemäß wird die Aufgabe bei dem Verfahren und Anordnung nach den in Ansprüchen 1 - 15 angegebenen Merkmalen gelöst.

Wichtige Merkmale der Erfindung bei dem Verfahren zur Entstörung eines aus Symbolen aufgebauten Signals sind in **Anspruch 1 angegeben**.

Weitere Einzelheiten des Verfahrens sind in den Unteransprüchen 2-9 angegeben.

Eine entsprechende elektronische Anordnung zur durchführung des Verfahrens ist in Anspruch 10 definiert.

Weitere Details der erwähnten elektronischen Anordnung sind in den Unteransprüchen 11-15 aufgeführt.

### Bezungszeichenliste

- 1: Einspeisevorrichtung
- 2: bewegliches Teil
- 3: induktive Kopplung
- 10: Signal
- 11: ein Symbol
- 12: erstes Symbol des Symbols
- 14: zweites Symbol des Symbols
- 15: ein weiteres Symbol
- 16: erstes Symbol des weiteren Symbols
- 18: zweites Symbol des weiteren Symbols
- 20: erste Störung
- 22: zweite Störung
- 24: dritte Störung
- 26: vierte Störung
- 30: entstörtes Symbol des Symbols
- 32: weiteres entstörtes Symbol des weitern Symbols
- 36: Signaleingang
- 38: Signalausgang
- 40: Detektor
- 42: Entscheider
- 44: Speicherelement
- 46: weiteres Speicherelement
- 48: erster Vervielfacher
- 50: Addierelement
- 52: zweiter Vervielfacher
- 54: Analog-Digital-Wandler
- 60: Einspeisesteller
- 62: Gleichrichter
- 64: Zwischenkreiskondensator
- 66: Wechselrichter

Die Erfindung wird nun anhand von Ausführungsbeispielen mit Bezugnahme auf die Zeichnung näher erläutert. Es zeigen rein schematisch:
- Fig. 1: ein Signal aus Symbolen mit Störungen;
- Fig. 2: entstörtes Signal, welches aus dem Signal in Figur 1 gebildet wird;
- Fig. 3: Prinzipskizze einer Signalverarbeitung für ein erfindungsgemäßes Verfahren;
- Fig. 4: eine erfindungsgemäße Vorrichtung zur Energie- und Signalübertragung; und
- Fig. 5: eine Spannungsquelle.

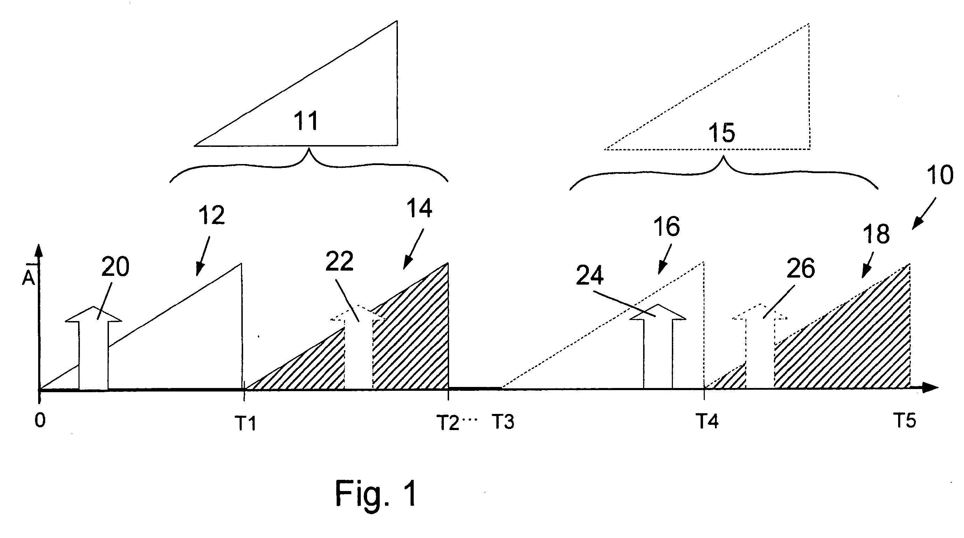

Figur 1 zeigt ein aus Symbolen 11, 15 aufgebautes Signal 10. Jedes Symbol 11, 15 wird zweifach als erstes Symbol 12, 16 und zweites Symbol 14, 18 zeitlich hintereinander gesendet. Die in Figur 1 gezeigte dreieckige Darstellung der Symbole 12, 14, 16, 18 ist rein schematisch. Ein Abschnitt eines Symbols 11, 15 entspricht einem Abschnitt des ersten Symbols 12, 16 und einem Abschnitt des zweiten Symbols 14, 18.

Während des Signals 10 treten Störungen 20, 22, 24, 26 auf. Die Störungen 20, 22, 24, 26 sind zeitlich begrenzt und treten zeitlich periodisch oder aperiodisch auf. Bei einer periodischen Störung ist die Periode größer als die Zeit in welcher das erste Symbol 12, 16 und das zweite Symbol 14, 18 gesendet werden, so dass nur eines der beiden Symbole des ersten und zweiten Symbols 12, 16, 14, 18 durch die periodische Störung gestört werden.

Zum Beispiel liegt eine erste Störung 20 in einem Anfangsbereich des ersten Symbols 12 und stört so einen ersten Abschnitt des ersten Symbols 12 des Symbols 11, welcher einem ersten Abschnitt des Symbols 11 entspricht. Der erste Abschnitt des zweiten Symbols 14 des Symbols 11 ist ungestört, das heißt es tritt keine Störung auf. Dadurch ist der erste Abschnitt des Symbols 11 durch das zweite Symbol 14 des Symbols 11 ohne Störung übertragen.

Eine zweite Störung 22 tritt im zweiten Symbol 14 des Symbols 11 auf, eine dritte Störung 24 im ersten Symbol 16 des weiteren Symbols 15 und eine vierte Störung 26 im zweiten Symbol 18 des weiteren Symbols 15. In diesem Beispiel ist jeder zeitliche Abschnitt des Symbols 11 oder des weiten Symbols 15 wenigstens durch eines der ersten Symbole 12, 16 oder der zweiten Symbole 14, 18 ohne Störung.

Es ist auch denkbar, dass bei einem gesendeten Symbol zufällig eine beliebige Störung im ersten Symbol und im zweiten Symbol des gesendeten Symbols so aufritt, dass ein Abschnitt des gesendeten Symbols im ersten und zweiten Symbol eine Störung'aufweist. Aber selbst in diesem Fall verbessert das erfindungsgemäße Verfahren die Signalübertragung.

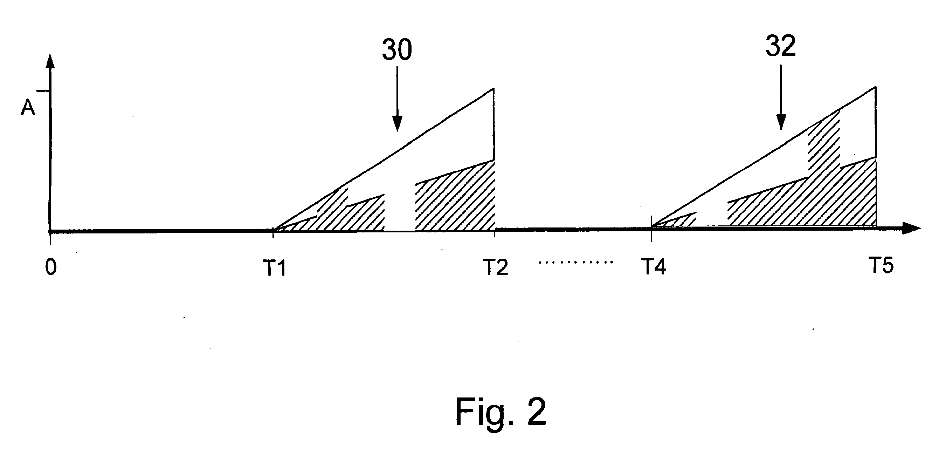

Figur 2 zeigt ein aus dem Symbol 11 bzw. dem weiteren Symbol 15 nach dem erfindungsgemäßen Verfahren zusammengesetztes entstörtes Symbol 30 bzw. ein weiteres entstörtes Symbol 32.

Das entstörte Symbol 30 ist aus dem ersten Symbol 12 und dem zweiten Symbol 14 des Symbols 11 nach dem erfindungsgemäßen Verfahren zusammengesetzt. Dabei lassen sich in diesem Fall drei Arten von unterschiedlichen zeitlichen Abschnitten des Symbols 11 unterscheiden. Da das erste Symbol 12 und das zweite Symbol 14 dieselbe Information übertragen, lassen sie sich zeitlich übereinanderlegen und die geeigneten Störungsfreien Abschnitte verwenden.

Dies geschieht nach folgendem Entscheidungsmuster. In einem Abschnitt erster Art liegt eine Störung, in dem Beispiel aus Figur 1 die erste Störung 20 und die dritte Störung 24 im ersten Symbol 12, 16 und eine Störungsfreiheit im zweiten Symbol 14, 18 vor. Somit ist das entstörte Symbol 30 bzw. das weitere entstörte Symbol 32 für diesen Abschnitt erster Art gleich dem zweiten Symbol 14, 18.

In einem Abschnitt zweiter Art liegt eine Störung, in dem Beispiel aus Figur 1 die zweite Störung 22 und die vierte Störung 26 im zweiten Symbol 14, 18 und eine Störungsfreiheit im ersten Symbol 12, 16 vor. In diesem Fall wird das entstörte Symbol 30, bzw. das weitere entstörte Symbol 32 gleich dem ersten Symbol 12, 16 gesetzt.

In einem Abschnitt dritter Art, welche im Beispiel in Figur 1 nicht dargestellt ist, liegt eine Störung im ersten Symbol und im zweiten Symbol vor. Das entstörte Symbol für den Abschnitt dritter Art wird aus einem Mittelwert aus dem ersten und zweiten Symbol gebildet.

In einem Abschnitt vierter Art liegt eine Störungsfreiheit im ersten Symbol und im zweiten Symbol vor. Dies entspricht dem größten Teil und mehreren zeitlichen Abschnitten des in Figur 1 dargestellten Symbols 11 und des weiteren Symbols 15. Das entsprechend entstörte Symbol 30 bzw weitere entstörte Symbol 32 ist für diesen Abschnitt vierter Art gleich einem Mittelwert aus dem ersten und zweiten Symbol.

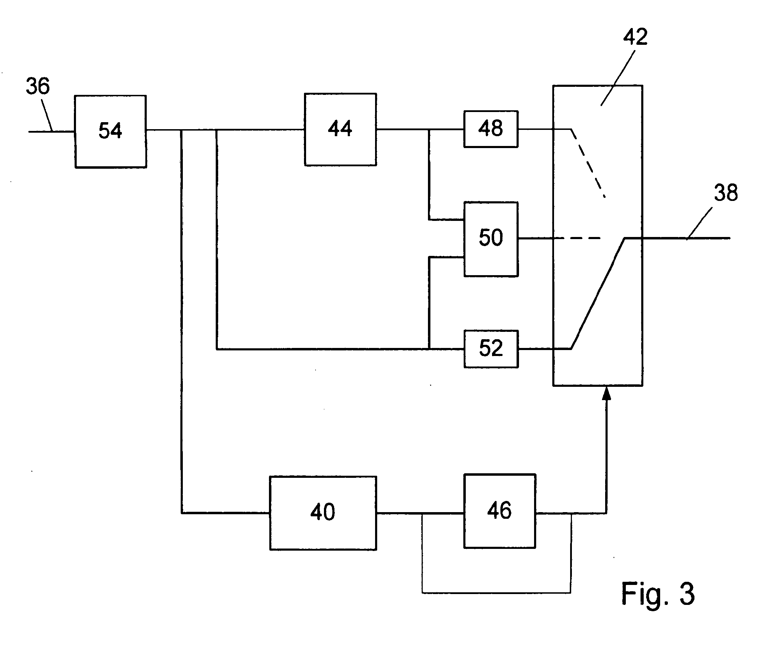

Figur 3 zeigt ein Blockdiagramm für ein erfindungsgemäßes Verfahren bzw. ein Blockschaltbild für eine elektronische Schaltung auf welcher ein erfindungsgemäßes Verfahren ausführbar ist oder ein Computerprogrammablauf für das erfindungsgemäße Verfahren. Zum Beispiel lässt sich das erfindungsgemäße Verfahren auf einem FPGA realisieren.

Bei einer Realisierung zur Entstörung eines OFDM-Signals wird das Verfahren in einer Empfangseinheit für das OFDM-Verfahren implementiert. Ein Signaleingang 36 leitet das empfangene Signal, wie zum Beispiel in Figur 1 gezeigt, auf einen Analog-Digital-Wandler 54. Der Analog-Digital-Wandler 54 weist eine digitale zeitliche Auflösung und ein digitale Tiefe, d.h. eine Amplitudendiskretisierung, auf.

Das Analog-Digital gewandelte Signal wird einem Detektor 40 einem Speicherelement 44, einem Addierelement 50 und einem zweiten Vervielfacher 52 zugeführt. Das Speicherelement 44 dient als Verzögerungslinie, zum Beispiel als FIFO-Element, zur zeitlichen Überlagerung des ersten Symbols 12, 16 mit dem entsprechenden zweiten Symbol 14, 18. Dafür weist das FIFO-Element eine Speicherkapazität auf, welche der zeitlichen Länge eines ersten oder zweiten Symbols entspricht. Der Ausgang des Speicherelementes liegt an einem ersten Vervielfacher und dem Addierelement an. '

Der Detektor 40 erkennt eine Störung im Signal. In dem Beispiel aus Figur 1 erkennt der Detektor die erste, zweite, dritte und vierte Störung 20, 22, 24, 26. Bei betragsmäßig großen Störungen lassen sich diese mittels eines Schwellwertes erkennen. Es gibt aber auch weitere Verfahren wie Mustererkennung, Korrelationsverfahren etc. zur Erkennung von unterschiedlichen Störungen.

Der Detektor 40 gibt einen Störwert mit der digitalen Auflösung des Analog-Digital-Wandlers 54 aus. Der Störwert unterscheidet zwischen dem Vorliegen einer Störung oder einer Störungsfreiheit im Signal mit einer digitalen Tiefe von 1, d.h. der Störwert ist 1-bitig. Bei einer weiteren Ausführungsform kann der Störwert auch eine Stärke der Störung widerspiegeln. Der Störwert wird über ein weiteres Speicherelement 46 einem Entscheider 42 zugeführt. Das weitere Speicherelement 46 dient als Verzögerungslinie für den Storwert, so dass am Entscheider 42 ein Wert vorliegt, der dem Störwert für das erste Symbol und für das zweite Symbol entspricht. Somit liegt ein 2-bitiger Wert vor, welcher die Information enthält, ob im ersten und/oder zweiten Symbol eine Störung für diesen diskreten Zeitpunkt eine Störung vorliegt.

Der Entscheider 42 ist zum Beispiel als Multiplexer ausgeführt, welcher, getaktet mit der digitalen Auflösung, Ausgänge des ersten und zweiten Vervielfachers und des Addierers auf einen Signalausgang 38 schaltet. Auf Grundlage des Wertes setzt der Entscheider 42 ein Ausgangssignal entsprechend dem erfindungsgemäßen Verfahren zusammen, wie zum Beispiel das in Figur 2 gezeigte entstörte Signal aus dem in Figur 1 gezeigten Signal 10.

Der erste und zweite Vervielfacher 48, 52 multiplizieren das entsprechend bei ihnen eingegangene digitale Signal vorzugsweise mit dem Faktor zwei. Es ist auch möglich bei einer weiteren, nicht gezeigten Ausführungsform den ersten und zweiten Vervielfacher 48, 52 wegzulassen und zwischen den Addierer 50 und den Entscheider 42 einen Dividierer einzufügen, welcher das Addierte Signal wieder halbiert.

Der Signalausgang 38 ist dann an die weiteren Elemente einer Empfangseinheit, wie zum Beispiel, Multiplexer, FFT-Einheit, Demodulator etc. angeschlossen.

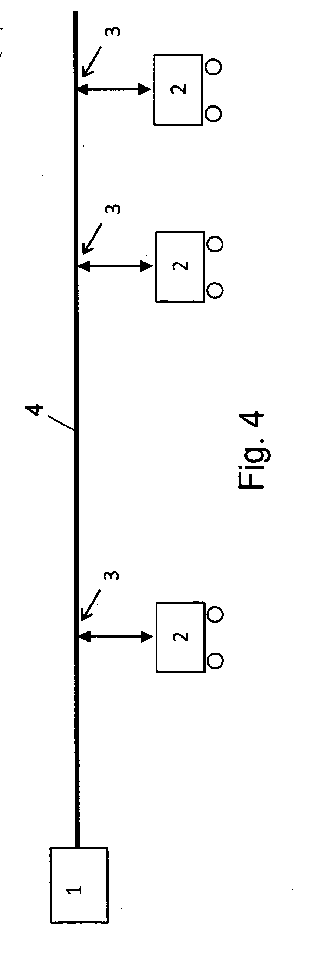

Figur 4 zeigt eine erfindungsgemäße Vorrichtung zur berührungslosen Signal und Energieübertragung. Die Vorrichtung weist eine Einspeisevorrichtung 1 und bewegliche Teile 2 auf. Die beweglichen Teil 2 sind über je eine induktive Kopplung 3 mit einem Primärleiter 4 gekoppelt. Die Vorrichtung ist näher in der DE 103 49 242 B3 beschrieben.

Über den Primärleiter 4 wird Energie aus der Einspeisevorrichtung zu den beweglichen Teilen 2 übertragen. Zusätzlich wird über den Primärleiter 4 auch ein Signal zur Datenübertragung zwischen der Einspeisevorrichtung 1 und den beweglichen Teilen 2 und/oder unter den beweglichen Teilen 2 übertragen. Dazu weisen die beweglichen Teile 2 erfindungsgemäße Empfangseinheiten auf, auf welchen das erfindungsgemäße Verfahren ausgeführt wird:

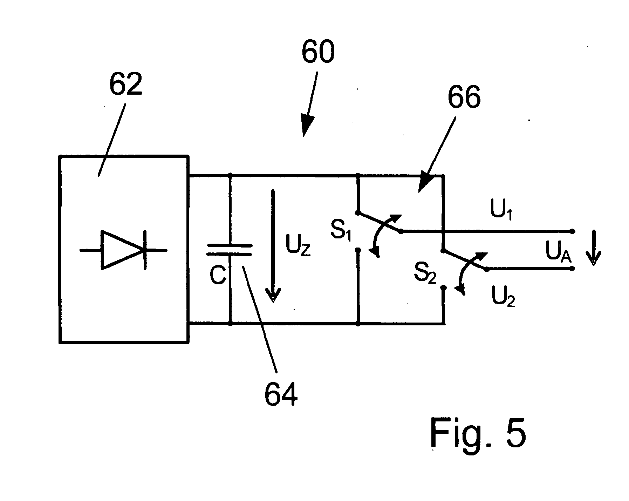

Die Einspeisevorrichtung 1 weist zum Beispiel einen in Figur 5 gezeigten Einspeisesteller 60 auf. Der Einspeisesteller 60 formt aus einer am Gleichrichter 62 angeschlossenen Netzspannung über einen Zwischenkreis mit einem Zwischenkreiskondensator 64 eine Wechselspannung U_{A}. Ein Wechselrichter 66 des Einspeisestellers 60 weist dazu mindestens zwei Schalter S₁ und S₂ auf. Das Schalten der Schalter verursacht Impulsstörungen, welche das Signal zur Datenübertragung auf dem Primärleiter stören. Dieses Signal kann vorteilhafterweise mit dem erfindungsgemäßen Verfahren beziehungsweise der erfindungsgemäßen Empfangseinheit entstört werden.

## Patentansprüche

1. Verfahren zur Entstörung eines aus Symbolen (11, 15) aufgebauten Signals,
wobei jedes Symbol (11, 15) zweifach als erstes Symbol (12, 16) und zweites Symbol (14, 18) zeitlich hintereinander gesendet wird, so dass ein Abschnitt eines Symbols (11, 15) sowohl einem Abschnitt des gesendeten ersten Symbols (12, 16) als auch einem Abschnitt des gesendeten zweiten Symbols (14, 18) entspricht, wobei ein Detektor (40) Störungen (20, 22, 24, 26) im ersten und/oder zweiten Symbol (12, 14, 16, 18) erkennt und einen Wert an einen Entscheider (42) übermittelt, wobei
der Entscheider (42) ein entstörtes Symbol (30, 32) aus dem ersten und zweiten Symbol (12, 14, 16, 18) auf Grundlage des Wertes nach folgendem Entscheidungsmuster erzeugt:
- für den Fall, dass in einem Abschnitt des Symbols (12, 16) eine Störung (20, 24) im ersten Symbol (12, 16) und eine Störungsfreiheit im zweiten Symbol (14, 18) vorliegt, erkennt der Detektor (40) den Abschnitt des Symbols (12, 16) als Abschnitt erster Art, worauf der Entscheider (42) das entstörte Symbol (30, 32) für diesen Abschnitt erster Art gleich dem zweiten Symbol (14, 18) setzt,
- für den Fall, dass in einem Abschnitt des Symbols (12, 16) eine Störung (22,26) im zweiten Symbol (14, 18) und eine Störungsfreiheit im ersten Symbol vorliegt, erkennt der Detektor (40) den Abschnitt des Symbols (12, 16) als Abschnitt zweiter Art, worauf der Entscheider das entstörte Symbol (30, 32) für den Abschnitt zweiter Art gleich dem ersten Symbol (14, 18) setzt,
- für den Fall, dass in einem Abschnitt des Symbols (12, 16) eine Störung im ersten Symbol (12, 16) und im zweiten Symbol (14, 18) vorliegt, erkennt der Detektor (40) den Abschnitt des Symbols (12, 16) als Abschnitt dritter Art, worauf der Entscheider das entstörte Symbol (30, 32) für den Abschnitt dritter Art gleich einem Mittelwert aus dem ersten und zweiten Symbol setzt,
- für den Fall, dass in einem Abschnitt des Symbols (12, 16) eine Störungsfreiheit im ersten Symbol (12, 16) und im zweiten Symbol (14, 18) vorliegt, erkennt der Detektor (40) den Abschnitt des Symbols (12, 16) als Abschnitt vierter Art, worauf der Entscheider (40) das entstörte Symbol (30,32) für den Abschnitt vierter Art gleich einem Mittelwert aus dem ersten und zweiten Symbol (12, 14, 16,1 8) setzt,
wobei der Entscheider (42) aus den entstörten Symbolen ein entstörtes Signal zusammensetzt.

2. Verfahren nach Anspruch 1
**dadurch gekennzeichnet, dass**
der Detektor (40) die Störungen (20, 22, 24, 26) erkennt, wenn das Signal betragsmäßig einen Schwellwert überschreitet.

3. Verfahren nach Anspruch 1,
**dadurch gekennzeichnet, dass**
der Detektor (40) die Störungen (20, 22, 24, 26) mittels Mustererkennung detektiert.

4. Verfahren nach einem der vorherigen Ansprüche,
**dadurch gekennzeichnet, dass**
das dem Detektor (40) zugeführte Signal hochpassgefiltert wird.

5. Verfahren nach einem der vorherigen Ansprüche,
**dadurch gekennzeichnet, dass**
das erste Symbol (12, 16) und das zugehörige zweite Symbol (14, 18) durch ein Speicher-Element (44) zeitlich übereinander gelegt werden.

6. Verfahren nach einem der vorherigen Ansprüche,
**dadurch gekennzeichnet, dass**
ein Störwert des Detektors (40) der dem ersten Symbol (12, 16) entspricht mit einem Störwert des zweiten Symbols (14, 18) zeitlich durch ein weiteres Speicher-Element (46) überlagert werden und somit aus zwei n-bitigen Störwerten der Wert als zwei mal-n-bitig gebildet wird.

7. Verfahren nach einem der vorherigen Ansprüche,
**dadurch gekennzeichnet, dass**
der Wert einer Gewichtung einer Stärke der Störung entspricht, welche der Detektor (40) ermittelt, und dass der Entscheider (42) in dem als Abschnitt dritter Art erkannten Abschnitt bei gleichzeitigem Vorliegen einer Störung im ersten und zweiten Symbol (12, 14, 16, 18) entstörte Symbol (30, 32) entsprechend der Gewichtung der Störungen aus dem ersten und zweiten Symbol (12, 14, 16, 18) berechnet.

8. Verfahren nach einem der vorherigen Ansprüche,
**dadurch gekennzeichnet, dass**
die Störungen (20, 22, 24, 26) periodisch auftreten und das erste Symbol und das zweite Symbol (12, 14, 16, 18) je eines Symbols in einer Periode angeordnet sind.

9. Verfahren nach einem der vorherigen Ansprüche,
**dadurch gekennzeichnet, dass**
das Signal aus OFDM-Symbolen aufgebaut ist.

10. Elektronische Anordnung zur Durchführung des Verfahrens nach einem der vorherigen Ansprüche.

11. Empfangseinheit für ein Signal, welches aus OFDM-Symbolen aufgebaut ist,
wobei die Empfangseinheit einen Analog-Digital-Wandler (54) und eine daran anschließenden digitalen OFDM-Decoder aufweist,
**dadurch gekennzeichnet, dass**
zwischen dem Analog-Digital-Wandler (54) und dem digitalen OFDM-Decoder eine elektronische Anordnung nach Anspruch 10 angeordnet ist.

12. Vorrichtung zur berührungslosen Übertragung elektrischer Leistung und Information von einem ersten Teil (1) auf ein relativ zum ersten Teil (1) bewegliches zweites Teil (2),
wobei eine Wechselspannungs- oder Wechselstromquelle eine Spannung oder einen Strom, welche eine erste Frequenz aufweist, in einen Primärleiter (4) des ersten Teils (1) einprägt, wobei das zweite Teil (2) eine Sekundärwicklung umfasst, die an den Primärleiter (4) elektromagnetisch gekoppelt ist,
wobei auf den Primärleiter (4) zusätzliche Datensignale mit einer Trägerfrequenz, welche höher ist als die erste Frequenz aufgekoppelt oder aufmoduliert sind,
**dadurch gekennzeichnet, dass**
das bewegliche zweite Teil (2) eine elektronische Anordnung nach Anspruch 10 aufweist, auf welcher das Signal mit einem Verfahren nach einem der Ansprüche 1 bis 9 entstört wird.

13. Vorrichtung nach Anspruch 12
**dadurch gekennzeichnet, dass**
das zweite Teil eine Empfangseinheit nach Anspruch 11 aufweist.

14. Vorrichtung nach Anspruch 12 oder 13,
**dadurch gekennzeichnet, dass**
das erste Teil (19) einen Einspeisesteller (60) aufweist, welcher aus einer Netzspannung eine dreistufige Rechteckspannung, welche die erste Frequenz aufweist, wandelt und über eine spannungsgesteuerte Stromquelle in den Primärleiter einprägt.

15. Vorrichtung nach einem der Ansprüche 12 bis 14,
**dadurch gekennzeichnet, dass**
die Sekundärwicklung an den Primärleiter induktiv gekoppelt ist,
wobei der Sekundärwicklung eine Kapazität in Reihe oder parallel zugeschaltet ist,
wobei die zugehörige Resonanzfrequenz der ersten Frequenz im Wesentlichen entspricht.

## Claims

1. Method for interference suppression of a signal composed of symbols (11, 15),
wherein each symbol (11, 15) is transmitted twice in temporal succession as a first symbol (12, 16) and a second symbol (14, 18), so that a segment of a symbol (11, 15) corresponds both to a segment of the first symbol (12, 16) transmitted and to a segment of the second symbol (14, 18) transmitted,
wherein a detector (40) detects interference (20, 22, 24, 26) in the first and/or second symbol (12, 14, 16, 18) and transmits a value to a decision element (42),
wherein the decision element (42) generates an interference-suppressed symbol (30, 32) from the first and second symbol (12, 14, 16, 18) on the basis of the value, according to the following decision pattern:
- in the case where, in a segment of the symbol (12, 16), interference (20, 24) is present in the first symbol (12, 16) and interference is absent in the second symbol (14, 18), the detector (40) detects the segment of the symbol (12, 16) as a segment of the first type, whereupon the decision element (42) sets the interference-suppressed symbol (30, 32) for this segment of the first type to be equal to the second symbol (14, 18),
- in the case where, in a segment of the symbol (12, 16), interference (22, 26) is present in the second symbol (14, 18) and interference is absent in the first symbol, the detector (40) detects the segment of the symbol (12, 16) as a segment of the second type, whereupon the decision element sets the interference-suppressed symbol (30, 32) for the segment of the second type to be equal to the first symbol (14, 18),
- in the case where, in a segment of the symbol (12, 16), interference is present in the first symbol (12, 16) and in the second symbol (14, 18), the detector (40) detects the segment of the symbol (12, 16) as a segment of the third type, whereupon the decision element sets the interference-suppressed symbol (30, 32) for the segment of the third type to be equal to an average value from the first and second symbol,
- in the case where, in a segment of the symbol (12, 16), interference is absent in the first symbol (12, 16) and in the second symbol (14, 18), the detector (40) detects the segment of the symbol (12, 16) as a segment of the fourth type, whereupon the decision element (42) [sic] sets the interference-suppressed symbol (30, 32) for the segment of the fourth type to be equal to an average value from the first and second symbol (12, 14, 16, 18),
wherein the decision element (42) composes an interference-suppressed signal from the interference-suppressed symbols.

2. Method according to Claim 1,
**characterised in that** the detector (40) detects the interference (20, 22, 24, 26) when the signal in terms of magnitude exceeds a threshold value.

3. Method according to Claim 1,
**characterised in that** the detector (40) detects the interference (20, 22, 24, 26) by means of pattern recognition.

4. Method according to one of the preceding claims,
**characterised in that**
the signal supplied to the detector (40) is high-pass-filtered.

5. Method according to one of the preceding claims,
**characterised in that**
the first symbol (12, 16) and the associated second symbol (14, 18) are temporally laid on top of one another by a memory element (44).

6. Method according to one of the preceding claims,
**characterised in that**
an interference value of the detector (40) which corresponds to the first symbol (12, 16) is temporally superposed with an interference value of the second symbol (14, 18) by a further memory element (46), and thus two n-bit interference values are used to form the value as two times n-bit.

7. Method according to one of the preceding claims,
**characterised in that**
the value of a weighting corresponds to an intensity of the interference which the detector (40) determines, and **in that** in the segment detected as a segment of the third type, when interference is present in the first and second symbol (12, 14, 16, 18) simultaneously, the decision element (42) calculates the interference-suppressed symbol (30, 32) according to the weighting of the interference from the first and second symbol (12, 14, 16, 18).

8. Method according to one of the preceding claims,
**characterised in that**
the interference (20, 22, 24, 26) occurs periodically, and the first symbol and the second symbol (12, 14, 16, 18) of one symbol in each case are arranged in one period.

9. Method according to one of the preceding claims,
**characterised in that**
the signal is composed of OFDM symbols.

10. Electronic arrangement for carrying out the method according to one of the preceding claims.

11. Receiving unit for a signal composed of OFDM symbols,
wherein the receiving unit has an analog-digital converter (54) and a digital OFDM decoder connected thereto,
**characterised in that**
an electronic arrangement according to Claim 10 is arranged between the analog-digital converter (54) and the digital OFDM decoder.

12. Device for contactless transmission of electrical power and information from a first part (1) to a second part (2) movable relative to the first part (1),
wherein an alternating voltage source or an alternating current source applies a voltage or a current having a first frequency into a primary conductor (4) of the first part (1), wherein the second part (2) comprises a secondary winding which is electromagnetically coupled to the primary conductor (4),
wherein additional data signals having a carrier frequency higher than the first frequency are coupled or modulated onto the primary conductor (4),
**characterised in that**
the movable second part (2) has an electronic arrangement according to Claim 10, on which the signal is interference-suppressed by a method according to one of Claims 1 to 9.

13. Device according to Claim 12,
**characterised in that**
the second part has a receiving unit according to Claim 11.

14. Device according to Claim 12 or 13,
**characterised in that**
the first part (19) has an infeed controller (60) which from a mains voltage converts a three-stage square-wave voltage having the first frequency, and applies it into the primary conductor via a voltage-controlled current source.

15. Device according to one of claims 12 to 14,
**characterised in that**
the secondary winding is inductively coupled to the primary conductor,
a capacitance being connected to the secondary winding in series or parallel,
the associated resonant frequency substantially corresponding to the first frequency.

## Revendications

1. Procédé de déparasitage d'un signal constitué de symboles (11, 15), dans lequel chaque symbole (11, 15) est émis deux fois successivement sous la forme d'un premier symbole (12, 16) et d'un deuxième symbole (14, 18), de façon qu'un segment d'un symbole (11, 15) corresponde aussi bien à un segment du premier symbole (12, 16) émis qu'à un segment du deuxième symbole (14, 18) émis, un détecteur (40) détectant des perturbations (20, 22, 24, 26) dans le premier et/ou deuxième symbole (12, 14, 16, 18) et transmettant une valeur à un circuit de décision (42),
le circuit de décision (42) générant un symbole déparasité (30, 32) à partir du premier et du deuxième symbole (12, 14, 16, 18) sur la base de la valeur selon le schéma de décision suivant :
- dans le cas où, dans un segment du symbole (12, 16), il existe une perturbation (20, 24) dans le premier symbole (12, 16) et une absence de perturbation dans le deuxième symbole (14, 18), le détecteur (40) reconnaît le segment du symbole (12, 16) comme segment de premier type, suite à quoi le circuit de décision (42) identifie le symbole déparasité (30, 32) pour ce segment de premier type au deuxième symbole (14, 18),
- dans le cas où, dans un segment du symbole (12, 16), il existe une perturbation (22, 26) dans le deuxième symbole (14, 18) et une absence de perturbation dans le premier symbole, le détecteur (40) reconnaît le segment du symbole (12, 16) comme segment de deuxième type, suite à quoi le circuit de décision identifie le symbole déparasité (30, 32) pour le segment de deuxième type au premier symbole (14, 18),
- dans le cas où, dans un segment du symbole (12, 16), il existe une perturbation dans le premier symbole (12, 16) et dans le deuxième symbole (14, 18), le détecteur (40) reconnaît le segment du symbole (12, 16) comme segment de troisième type, suite à quoi le circuit de décision identifie le symbole déparasité (30, 32) pour le segment de troisième type à une moyenne du premier et du deuxième symbole,
- dans le cas où, dans un segment du symbole (12, 16), il existe une absence de perturbation dans le premier symbole (12, 16) et dans le deuxième symbole (14, 18), le détecteur (40) reconnaît le segment du symbole (12, 16) comme segment de quatrième type, suite à quoi le circuit de décision (42) identifie le symbole déparasité (30, 32) pour le segment de quatrième type à une moyenne du premier et du deuxième symbole (12, 14, 16, 18),
le circuit de décision (42) composant un signal déparasité à partir des symboles déparasités.

2. Procédé selon la revendication 1
**caractérisé en ce que**
le détecteur (40) reconnaît les perturbations (20, 22, 24, 26) lorsque le signal dépasse une valeur seuil en valeur absolue.

3. Procédé selon la revendication 1,
**caractérisé en ce que**
le détecteur (40) détecte les perturbations (20, 22, 24, 26) au moyen d'une reconnaissance de forme.

4. Procédé selon une des revendications précédentes,
**caractérisé en ce que**
le signal amené au détecteur (40) subit un filtrage passe-haut.

5. Procédé selon une des revendications précédentes,
**caractérisé en ce que**
le premier symbole (12, 16) et le deuxième symbole associé (14, 18) sont superposés temporellement par un élément à mémoire (44).

6. Procédé selon une des revendications précédentes,
**caractérisé en ce que**
une valeur perturbatrice du détecteur (40) qui correspond au premier symbole (12, 16) et une valeur perturbatrice du deuxième symbole (14, 18) sont superposées temporellement par un autre élément à mémoire (46), une valeur de deux fois n bits étant ainsi formée à partir de deux valeurs perturbatrices de n bits.

7. Procédé selon une des revendications précédentes,
**caractérisé en ce que**
la valeur correspond à une pondération d'une intensité de la perturbation que le détecteur (40) détermine, et **en ce que** le circuit de décision (42) calcule, dans le segment reconnu comme segment de troisième type, en cas de présence simultanée d'une perturbation dans le premier et le deuxième symbole (12, 14, 16, 18), le symbole déparasité (30, 32) en fonction de la pondération des perturbations dans le premier et le deuxième symbole (12, 14, 16, 18).

8. Procédé selon une des revendications précédentes,
**caractérisé en ce que**
les perturbations (20, 22, 24, 26) se produisent périodiquement et le premier symbole et le deuxième symbole (12, 14, 16, 18) de chaque fois un symbole sont disposés dans une période.

9. Procédé selon une des revendications précédentes,
**caractérisé en ce que**
le signal est constitué de symboles OFDM.

10. Dispositif électronique pour réaliser le procédé selon une des revendications précédentes.

11. Unité de réception pour un signal qui est constitué de symboles OFDM, l'unité de réception présentant un convertisseur analogique-numérique (54) et un décodeur OFDM numérique placé à la suite,
**caractérisé en ce que**
un dispositif électronique selon la revendication 10 est disposé entre le convertisseur analogique-numérique (54) et le décodeur OFDM numérique.

12. Dispositif de transmission sans contact de puissance électrique et d'informations d'une première partie (1) à une deuxième partie (2) mobile par rapport à la première partie (1), dans lequel une source de tension alternative ou de courant alternatif applique une tension ou un courant, qui présente une première fréquence, dans un conducteur primaire (4) de la première partie (1), la deuxième partie (2) comprenant un enroulement secondaire qui est couplé électromagnétiquement au conducteur primaire (4),
des signaux de données supplémentaires étant couplés ou modulés sur le conducteur primaire (4) avec une fréquence porteuse qui est plus élevée que la première fréquence, **caractérisé en ce que**
la deuxième partie mobile (2) présente un dispositif électronique selon la revendication 10, sur lequel le signal est déparasité avec un procédé selon une des revendications 1 à 9.

13. Dispositif selon la revendication 12,
**caractérisé en ce que**
la deuxième partie présente une unité de réception selon la revendication 11.

14. Dispositif selon la revendication 12 ou 13,
**caractérisé en ce que**
la première partie (19) présente un module d'alimentation (60) qui convertit une tension du secteur en une tension rectangulaire à trois paliers qui présente la première fréquence et l'applique dans le conducteur primaire par l'intermédiaire d'une source de courant commandée en tension.

15. Dispositif selon une des revendications 12 à 14,
**caractérisé en ce que**
l'enroulement secondaire est couplé au conducteur primaire par induction,
une capacité étant connectée en série ou en parallèle à l'enroulement secondaire,
la fréquence de résonance associée correspondant sensiblement à la première fréquence.
